# EUROPÄISCHE PATENTSCHRIFT

(11) **EP 2 201 638 B1**
(45) Veröffentlichungstag und Bekanntmachung des Hinweises auf die Patenterteilung: **05.03.2014**
(21) Anmeldenummer: 08805071.1
(22) Anmeldetag: 06.10.2008
(51) Int. Cl.: H01M 10/42, H01M 10/48, H01G 9/14

(54) **ENERGIESPEICHER**
ENERGY STORAGE UNIT
ACCUMULATEUR D'ÉNERGIE

(30) Priorität: 10.10.2007 DE 102007048659
(43) Veröffentlichungstag der Anmeldung: 30.06.2010
(73) Patentinhaber: Continental Automotive GmbH, 30165 Hannover (DE)
(72) Erfinder: ROMBACH, Gerhard, 78098 Triberg (DE)
(86) Internationale Anmeldenummer: PCT/EP2008/063324
(87) Internationale Veröffentlichungsnummer: WO 2009/050050

(56) Entgegenhaltungen:
- EP-A- 1 786 057
- WO-A-03/079032
- US-A1- 2005 017 726

## Beschreibung

Die Erfindung bezieht sich auf einen Energiespeicher für ein Kraftfahrzeug.

In modernen Kraftfahrzeugen sind Anforderungen an die Zuverlässigkeit und Leistungsfähigkeit des elektrischen Bordnetzes besonders hoch. Insbesondere in einem Hybrid- oder Elektrofahrzeug mit vorwiegend elektrischen Antrieben spielen die Energiespeicher eine wichtige Rolle. Darüber hinaus steigt die Anzahl von elektrisch betriebenen Systemen in heutigen Kraftfahrzeugen ständig. Dadurch erhöht sich der Leitungsbedarf derartiger Kraftfahrzeuge erheblich. Energiemanagementsysteme in modernen Kraftfahrzeugen versuchen den Energiebedarf im gesamten Kraftfahrzeug geeignet zu steuern, so dass es zu keinen Ausfällen des jeweiligen Energiespeichers aufgrund von zu hohen Stromverbräuchen kommt.

Der Artikel "Friend or Foe - Battery-Authentication ICs separate the good guys from the bad" von Margery Conner, publiziert am 2. Februar 2006 in EDN offenbart eine Verwendung von Authentifikationschips in Batterien, sowie Akkumulatoren für Mobilfunktelefonen oder Laptops. Mittels dieser Authentifikations-Chips werden Batterien oder Akkumulatoren gegenüber dem jeweiligen Gerät eindeutig identifiziert, so dass nur geeignete Batterien oder Akkumulatoren verwendet werden können.

Die EP 1 786 057 A2, WO 03/079032 A und US 2005/017726 A1 beschreiben jeweils einen Batteriespeicher mit den Merkmalen des Oberbegriffs des Anspruchs 1.

Die Aufgabe, die der Erfindung zugrunde liegt, ist es, einen Energiespeicher zu schaffen, der möglichst sicher und effizient zu betreiben ist.

Die Aufgabe wird gelöst durch die Merkmale des unabhängigen Patentanspruchs. Vorteilhafte Ausgestaltungen der Erfindung sind in den Unteransprüchen gekennzeichnet.

Gemäß einer vorteilhaften Ausgestaltung ist die Sicherheitseinheit dazu ausgebildet, abhängig von erfassten und/oder verarbeiteten Betriebsparametern eine Prüfsumme zu erzeugen. Dazu wird abhängig von den erfassten Betriebsparametern vor deren Übermittlung die Prüfsumme ermittelt. Diese kann zusätzlich zu den Betriebsparametern übermittelt werden, um eine Änderung während der Übermittlung sicher zu erkennen. Dadurch kann die Integrität der Parameter sicher gewährleistet werden.

Gemäß einer weiteren vorteilhaften Ausgestaltung ist die Sicherheitseinheit dazu ausgebildet, mittels der kryptologischen Verarbeitung der Betriebsparameter den Energiespeicher zu authentifizieren. Durch eine geeignete Verschlüsselung und Prüfsummengenerierung kann der Energiespeicher gegenüber dem Empfänger der Betriebsparameter authentifiziert werden. Ungeeignete Energiespeicher lassen sich somit einfach und sicher erkennen, wodurch z. B. Gewährleistungsansprüche in Schadensfällen eindeutig geklärt werden können. Ein als geeignet identifizierter Energiespeicher kann besonders effizient betrieben werden.

Gemäß einer weiteren vorteilhaften Ausgestaltung ist die Sicherheitseinheit als Smart-Card-Controller ausgebildet mit einem sicheren nicht-flüchtigen Speicher zu Speicherung von zu schützenden Daten. Smart-Card-Controller sind besonders bevorzugt für Verschlüsselungen und Prüfsummengenerierungen ausgebildet. Die zur Verschlüsselung oder Prüfsummengenerierung verwendeten kryptologischen Schlüssel werden nur innerhalb des Smart-Card-Controllers verwendet, so dass Manipulation sicher verhindert werden können. Auf dem sicheren nicht-flüchtigen Speicher können neben den kryptologischen Schlüsseln auch Betriebsparameter abgespeichert sein. Darüber hinaus sind Smart-Card-Controller bewährte Bauelemente, die besonders kostengünstig sind.

Gemäß einer weiteren vorteilhaften Ausgestaltung umfasst die Applikationseinheit einen Applikationscontroller mit Peripherieschnittstellen zum Erfassen und/oder Verarbeiten von Betriebsparametern des Energiespeichers. Der Applikationscontroller wird bevorzugt als besonders leistungsfähig ausgebildet, um die Betriebsparameter zu erfassen und besonders schnell verarbeiten zu können. Besonders geeignet kann der Applikationscontroller auch als Master-Controller eingesetzt werden, um neben der Erfassung und/oder Verarbeitung der Betriebsparameter auch die Sicherheitseinheit anzusteuern.

Gemäß einer weiteren vorteilhaften Ausgestaltung sind die Sicherheitseinheit und die Applikationseinheit auf einem Chip integriert. Dadurch kann die Erfassung und die Verarbeitung der Betriebsparameter des Energiespeichers besonders schnell und sicher gewährleistet werden.

Gemäß einer weiteren vorteilhaften Ausgestaltung umfasst die Applikationseinheit die Kommunikationsschnittstelle. Die Applikationseinheit umfasst bevorzugt die Peripherieschnittstellen und kann somit besonders einfach zur Übermittlung der Betriebsparameter verwendet werden.

Gemäß einer weiteren vorteilhaften Ausgestaltung ist die Kommunikationsschnittstelle dazu ausgebildet, die Betriebsparameter drahtlos zu übermitteln. Die drahtlose Übermittlung ist besonders geeignet externen Empfängern die Betriebsparameter zur Verfügung zu stellen. Dabei kann beispielsweise mittels Diagnosevorrichtung der Energiespeicher überprüft werden.

Gemäß einer weiteren vorteilhaften Ausgestaltung umfasst die Applikationseinheit eine Messeinheit, die dazu ausgebildet ist, Betriebsparameter des Energiespeichers zu erfassen. Somit lassen sich die Betriebsparameter des Energiespeichers besonders einfach erfassen.

Ausführungsbeispiele der Erfindung sind im Folgenden anhand der schematischen Zeichnungen näher erläutert. Es zeigen:
- Figur 1: eine schematische Darstellung eines Energiespeichers,
- Figur 2: eine weitere schematische Darstellung eines Energiespeichers.

Elemente gleicher Konstruktion und/oder Funktion sind figurenübergreifend mit den gleichen Bezugszeichen gekennzeichnet.

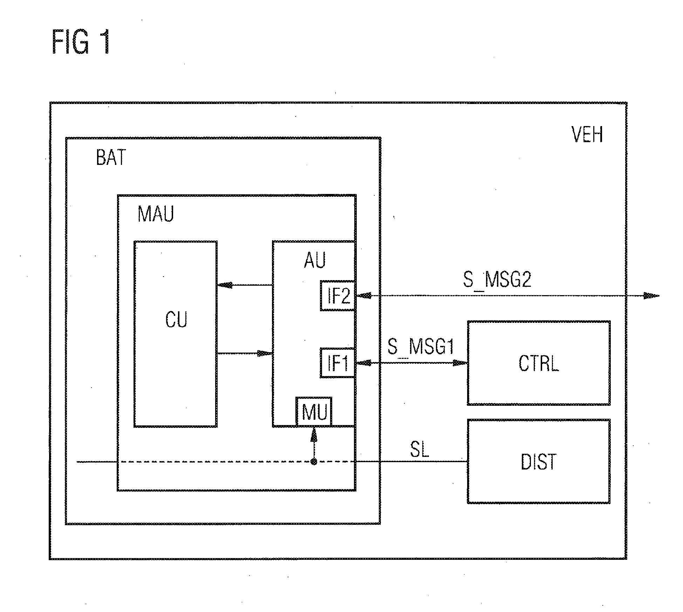

In einem ersten Ausführungsbeispiel (Figur 1) ist ein Kraftfahrzeug VEH schematisch dargestellt. Das Kraftfahrzeug VEH umfasst als einen Energiespeicher eine Batterie BAT zur Versorgung des Bordnetzes. Typischerweise kann der Energiespeicher aber auch als Doppelschicht-Kondensator, insbesondere als sogenannter UltraCap oder SuperCap in Hybridfahrzeugen ausgebildet sein. Aber auch andere dem Fachmann bekannte Ausführungen von Energiespeichern sind denkbar.

Der Energiespeicher BAT umfasst eine Mess- und Authentisierungseinheit MAU, der eingangsseitig eine Versorgungsleitung SL zugeordnet ist, die typischerweise mit den Anschlussklemmen des Energiespeichers BAT verbunden ist. Typischerweise wird die Mess- und Authentisierungseinheit MAU auch über die Versorgungsleitung SL versorgt. Mittels der Versorgungsleitung SL ist der Energiespeicher BAT mit einer Energieverteilung DIST und somit mit dem Bordnetz des Kraftfahrzeugs VEH verbunden. Die Mess- und Authentisierungseinheit MAU kann beispielsweise in einem separaten Bereich im Gehäuse des Energiespeichers BAT integriert sein, so dass die Mess- und Authentisierungseinheit MAU nicht-lösbar mit dem Energiespeicher BAT verbunden ist und mechanisch geschützt ist. Auch eine Kapselung der Mess- und Authentisierungseinheit MAU und deren Befestigung außerhalb des Energiespeichers ist denkbar, wobei darauf zu achten ist, dass die Befestigung mechanisch nicht-lösbar ist.

Des Weiteren umfasst die Mess- und Authentisierungseinheit MAU eine Sicherheitseinheit CU und eine Applikationseinheit AU. Die Sicherheitseinheit CU und die Applikationseinheit AU sind miteinander verbunden, so dass Daten zwischen beiden Einheiten bidirektional ausgetauscht werden können, so z. B. mittels SPI. Ferner können weitere Signalleitungen zur Übermittlung von Ansteuersignalen zwischen den Einheiten vorhanden sein. Die Sicherheitseinheit CU ist als Smart-Card-Controller ausgebildet und umfasst typischerweise neben der Kommunikationsmöglichkeit mit der Applikationseinheit keine weiteren Peripheriemodule. Smart-Card-Controller sind typischerweise für kryptologische Verarbeitungen, wie Ver- und/oder Entschlüsselungen von Datenströmen, sowie Generierung und/oder Überprüfung von Prüfsummen geeignet ausgebildet. Die Applikationseinheit AU umfasst eine für eine Erfassung der Betriebsparameter benötigte Messeinheit MU. Neben der Messeinheit MU umfasst die Applikationseinheit AU auch eine erste und eine zweite Kommunikationsschnittstelle IF1 und IF2. Mittels der ersten Kommunikationsschnittstelle IF1 ist die Applikationseinheit AU einem Steuergerät CTRL zugeordnet, das beispielsweise als Energiemanagementsystem ausgebildet ist. Die erste Kommunikationsschnittstelle IF1 ist typischerweise als CAN-Schnittstelle ausgebildet, so dass die Betriebsparameter des Energiespeichers BAT nicht nur dem Energiemanagementsystem CTRL zur Verfügung stehen, sondern auch anderen Steuergeräten. Die erste Kommunikationsschnittstelle IF1 kann auch drahtlos ausgebildet sein. Aber auch andere dem Fachmann bekannte Kommunikationsschnittstellen, so z. B. LIN, sind denkbar.

Die zweite Kommunikationseinheit IF2 ist typischerweise als drahtlose Schnittstelle ausgebildet, so z. B. Bluetooth oder WLAN. Mittels dieser können die Betriebsparameter des Energiespeichers BAT auch anderen Vorrichtungen außerhalb des Kraftfahrzeugs zur Verfügung gestellt werden. Beispielsweise können dadurch die Betriebsparameter einer Diagnosevorrichtung in einer Werkstatt übermittelt werden. Die mittels der zweiten Kommunikationsschnittstelle IF2 übertragenen Betriebsparameter können beispielsweise auch zur Abrechnung an einer Tankstelle zum Laden des Energiespeichers verwendet werden. Generell ist aber auch eine drahtgebundene zweite Kommunikationsschnittstelle, so z. B. CAN, USB oder RS232, denkbar.

Mittels der Messeinheit MU in der Applikationseinheit AU werden die Betriebsparameter des Energiespeichers BAT an der Versorgungsleitung SL erfasst und in der Applikationseinheit AU verarbeitet. Die verarbeiteten Betriebsparameter werden danach der Sicherheitseinheit CU zugeführt und mittels dieser kryptologisch verarbeitet. Dabei kann den Betriebsparametern eine Prüfsumme hinzugefügt werden und/oder die Betriebsparameter verschlüsselt werden. Die verschlüsselten und/oder mit einer Prüfsumme versehenden Betriebsparameter werden in der Sicherheitseinheit CU zwischengespeichert und/oder wieder zur Applikationseinheit AU übermittelt und mittels dieser dem Energiemanagementsystem CTRL oder der Diagnosevorrichtung übermittelt.

Die Betriebsparameter des Energiespeichers sind beispielsweise eine Spannung, ein Strom, eine Kapazität, eine Temperatur oder ein Typ des Energiespeichers. Abhängig von diesen Parametern kann das Spannung- und Stromverhalten des Energiespeichers BAT ermittelt werden und somit ein Lade- und Entladevorgang angepasst werden, so dass der Energiespeicher BAT effizient genutzt wird.

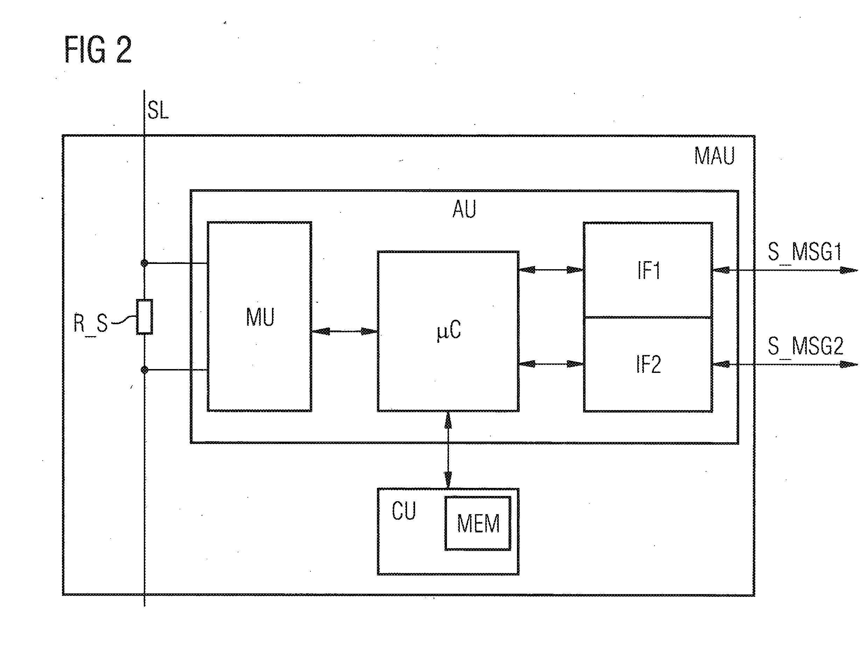

In Figur 2 ist die Mess- und Authentisierungseinheit MAU dargestellt umfassend die Applikationseinheit AU und die Sicherheitseinheit CU. Die Applikationseinheit AU umfasst neben der ersten und zweiten Kommunikationsschnittstelle IF1 und IF2 und der Messeinheit MU auch einen Applikationscontroller µC. Dieser umfasst typischerweise Peripheriemodule zur Anbindung an die Kommunikationsschnittstellen IF1 und IF2 und die Messeinheit MU. Dabei kann der Applikationscontroller µC auch derart ausgebildet sein, dass er die Messeinheit MU und/oder die Kommunikationsschnittstellen IF1 und IF2 umfasst.

Die Sicherheitseinheit CU ist als Smart-Card-Controller mit einem nicht-flüchtigen Speicher MEM ausgebildet.

Mittels eines Shuntwiderstandes R_S wird der Strom als Beispiel für einen Betriebsparameter des Energiespeichers BAT von der Messeinheit MU erfasst, der in diesem Fall beispielsweise als Analog-Digital-Wandler ausgeführt sein kann. Mittels des Applikationscontrollers µC wird abhängig von den erfassten Analog-Digital-Werten der Strom durch den Shunt-Widerstand R_S ermittelt und dem Smart-Card-Controller zugeführt. Der Applikationscontroller µC ist typischerweise als Master-Controller ausgebildet und steuert den als Slave-Controller ausgebildeten Smart-Card-Controller derart an, dass der übermittelte Stromwert verschlüsselt und/oder abhängig von diesem eine Prüfsumme generiert wird. Dabei sind die zur Verschlüsselung und/oder Prüfsummengenerierung benötigten kryptologischen Schlüssel in dem nicht-flüchtigen Speicher MEM des Smart-Card-Controllers gespeichert. Der Smart-Card-Controller ist derart ausgebildet, dass der Zugriff auf den nicht-flüchtigen Speicher MEM nur durch ihn selbst durchgeführt werden kann. Ein externer Zugriff auf den nicht-flüchtigen Speicher ist nicht möglich.

Der verschlüsselte und/oder mit einer Prüfsumme versehende Stromwert kann abhängig von der Ansteuerung des Applikationscontrollers µC in dem nicht-flüchtigen Speicher MEM zwischengespeichert werden. Darüberhinaus können in dem nicht-flüchtigen Speicher MEM auch Lade- und Entladeparameter, sowie Identifikationsparameter des Energiespeichers abgespeichert sein. Es können aber auch weitere nicht-flüchtige Speicher beispielsweise in der Applikationseinheit AU vorhanden sein, in den die Parameter bevorzugt verschlüsselt oder mit einer Prüfsumme versehen abgespeichert werden können.

Wird der Stromwert beispielsweise von dem Energiemanagementsystem CTRL angefordert, so wird der verschlüsselte und/oder mit der Prüfsumme versehende Stromwert zurück zum Applikationscontroller µC und mittels der ersten oder zweiten Kommunikationsschnittstelle IF1 oder IF2 zu dem Energiemanagementsystem CTRL oder der externen Diagnosevorrichtung übermittelt.

Neben der Übermittlung von Identifikationsparametern des Energiespeichers BAT kann sich dieser gegenüber dem Energiemanagementsystem CTRL oder den anderen Steuergeräten auch derart authentifizieren, dass geeignete Verschlüsselungs- und/oder des Prüfsummenverfahren, so z. B. Message-Authentication-Code-Verfahren oder Challenge-Response-Verfahren, verwendet werden. Der Energiespeicher BAT kann sich somit als geeignet oder nicht-geeignet identifizieren. Wird der Energiespeicher BAT als nicht-geeignet identifiziert oder wird zwischen der Mess- und Authentisierungseinheit MAU manipuliert, so z. B. Nachrichten verändert, können diese eindeutig erkannt werden und beispielsweise im nicht-flüchtigen Speicher elektronisch protokolliert werden. Kommt es durch durch die Verwendung von nicht-geeigneten Energiespeichern zu Schadenfällen, können anhand der Protokollierung Gewährleistungsansprüche geklärt werden.

Identifiziert sich der Energiespeicher BAT dagegen als geeigneter Energiespeicher und werden die Betriebs, sowie Lade- und Entladeparameter dem jeweiligen Steuergerät übermittelt, kann der jeweilige Energiespeicher durch geeignete Anpassung der Energieaufnahme und -abgabe effizient betrieben werden. Darüber hinaus lässt sich durch die Einbeziehung der Energiespeicher die gesamte System-Architektur des Kraftfahrzeugs effizienter betreiben.

Neben der separat verwendeten Applikationseinheit AU und der Sicherheitseinheit CU ist auch eine Integration der Einheiten auf einem Chip denkbar.

## Patentansprüche

1. Energiespeicher (BAT) für ein Kraftfahrzeug zur Versorgung des Bordnetzes, umfassend eine Mess- und Authentisierungseinheit (MAU) mit einer Applikationseinheit (AU), die dazu ausgebildet ist, vorgegebene Betriebsparameter des Energiespeichers zu erfassen und/oder zu verarbeiten, und einer Sicherheitseinheit (CU), die dazu ausgebildet ist, die erfassten und/oder verarbeiteten Betriebsparameter kryptologisch zu verarbeiten, und einer Kommunikationsschnittstelle (IF1, IF2), um die kryptologisch verarbeiteten Betriebsparameter zur Verfügung zu stellen, **dadurch gekennzeichnet, dass** die Mess- und Authentisierungseinheit nicht lösbar mit dem Energiespeicher (BAT) verbunden ist.

2. Energiespeicher nach Anspruch 1, bei dem die Sicherheitseinheit (CU) dazu ausgebildet ist, abhängig von erfassten und/oder verarbeiteten Betriebsparametern eine Prüfsumme zu erzeugen.

3. Energiespeicher nach einem der vorstehenden Ansprüche, bei dem die Sicherheitseinheit (CU) dazu ausgebildet ist, mittels der kryptologischen Verarbeitung der Betriebsparameter den Energiespeicher zu authentifizieren.

4. Energiespeicher nach einem der vorstehenden Ansprüche, bei dem die Sicherheitseinheit (CU) als Smart-Card-Controller ausgebildet ist mit einem nicht-flüchtigen Speicher zu Speicherung von zu schützenden Daten.

5. Energiespeicher nach einem der vorstehenden Ansprüche, bei dem die Applikationseinheit (AU) einen Applikationscontroller umfasst mit Peripherieschnittstellen zum Erfassen und/oder Verarbeiten von Betriebsparametern des Energiespeichers.

6. Energiespeicher nach einem der vorstehenden Ansprüche, bei dem die Sicherheitseinheit (CU) und die Applikationseinheit (AU) auf einem Chip integriert sind.

7. Energiespeicher nach einem der vorstehenden Ansprüche, bei dem die Applikationseinheit (AU) die Kommunikationsschnittstelle (IF1, IF2) umfasst.

8. Energiespeicher nach Anspruch 7, bei dem die Kommunikationsschnittstelle (IF1, IF2) dazu ausgebildet ist, die Betriebsparameter drahtlos zu übermitteln.

9. Energiespeicher nach einem der vorstehenden Ansprüche, bei dem die Applikationseinheit (AU) eine Messeinheit (MU) umfasst, die dazu ausgebildet ist, Betriebsparameter des Energiespeichers zu erfassen.

## Claims

1. Energy store (BAT) for a motor vehicle for supplying the on-board power supply system, comprising a measurement and authentication unit (MAU) having an application unit (AU) which is designed to record and/or to process predetermined operating parameters of the energy store, and having a security unit (CU), which is designed to process the recorded and/or processed operating parameters cryptologically, and having a communication interface (IF1, IF2) in order to make the cryptologically processed operating parameters available, **characterized in that** the measurement and authentication unit is connected non-detachably to the energy store (BAT).

2. Energy store according to Claim 1, in which the security unit (CU) is designed to produce a checksum as a function of recorded and/or processed operating parameters.

3. Energy store according to one of the preceding claims, in which the security unit (CU) is designed to authenticate the energy store by means of the cryptological processing of the operating parameters.

4. Energy store according to one of the preceding claims, in which the security unit (CU) is in the form of a smart card controller, and has a non-volatile memory for storage of data to be protected.

5. Energy store according to one of the preceding claims, in which the application unit (AU) comprises an application controller with peripheral interfaces for recording and/or processing of operating parameters of the energy store.

6. Energy store according to one of the preceding claims, in which the security unit (CU) and the application unit (AU) are integrated on one chip.

7. Energy store according to one of the preceding claims, in which the application unit (AU) comprises the communication interface (IF1, IF2).

8. Energy store according to Claim 7, in which the communication interface (IF1, IF2) is designed to transmit the operating parameters wirelessly.

9. Energy store according to one of the preceding claims, in which the application unit (AU) comprises a measurement unit (MU) which is designed to record operating parameters of the energy store.

## Revendications

1. Accumulateur (BAT) d'énergie pour un véhicule automobile, en vue de l'alimentation du réseau de bord, comprenant une unité (MAU) de mesure et d'authentification ayant une unité (AU) d'application, qui est constituée pour détecter des paramètres de fonctionnement donnés à l'avance de l'accumulateur d'énergie et/ou pour les traiter et une unité (CU) de sécurité, qui est constituée pour traiter cryptologiquement les paramètres de fonctionnement détectés et/ou traités et une interface (IF1, IF2) de communication pour mettre les paramètres de fonctionnement traités cryptologiquement à disposition, **caractérisé en ce que** l'unité de mesure et d'authentification est reliée de manière inamovible à l'accumulateur (BAT) d'énergie.

2. Accumulateur d'énergie suivant la revendication 1, dans lequel l'unité (CU) de sécurité est constituée pour produire une somme de contrôle en fonction de paramètre de fonctionnement détectés et/ou traités.

3. Accumulateur d'énergie suivant l'une des revendications précédentes, dans lequel l'unité (CU) de sécurité est constituée pour authentifier l'accumulateur d'énergie au moyen du traitement cryptologique des paramètres de fonctionnement.

4. Accumulateur d'énergie suivant l'une des revendications précédentes, dans lequel l'unité (CU) de sécurité est constituée sous la forme d'une unité de commande à carte à puce ayant une mémoire rémanente de mémorisation de données à protéger.

5. Accumulateur d'énergie suivant l'une des revendications précédentes, dans lequel l'unité (AU) d'application comprend une unité de commande d'application ayant des interfaces périphériques pour la détection et/ou le traitement de paramètres de fonctionnement de l'accumulateur d'énergie.

6. Accumulateur d'énergie suivant l'une des revendications précédentes, dans lequel l'unité (CU) de sécurité et l'unité (AU) d'application sont intégrées sur une puce.

7. Accumulateur d'énergie suivant l'une des revendications précédentes, dans lequel l'unité (AU) d'application comprend l'interface (IF1, IF2) de communication.

8. Accumulateur d'énergie suivant la revendication 7, l'interface (IF1, IF2) de communication est constituée pour transmettre sans fil les paramètres de fonctionnement.

9. Accumulateur d'énergie suivant l'une des revendications précédentes, dans lequel l'unité (AU) d'application comprend une unité (MU) de mesure, qui est constituée pour détecter des paramètres de fonctionnement de l'accumulateur d'énergie.
